(19) Europäisches Patentamt
European Patent Office
Office européen des brevets

(11) EP 2 653 491 A1

(12) EUROPEAN PATENT APPLICATION
published in accordance with Art. 153(4) EPC

(43) Date of publication:
**23.10.2013 Bulletin 2013/43**

(21) Application number: **11848842.8**

(22) Date of filing: **14.12.2011**

(51) Int Cl.:
*C08G 73/10* (2006.01) *G03G 15/00* (2006.01)
*G03G 15/16* (2006.01) *G03G 15/20* (2006.01)

(86) International application number:
**PCT/JP2011/078970**

(87) International publication number:
**WO 2012/081644 (21.06.2012 Gazette 2012/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2010 JP 2010279535**

(71) Applicant: **Ube Industries, Ltd.**
**Ube-shi**
**Yamaguchi 755-8633 (JP)**

(72) Inventors:
- **NAKAYAMA, Takeshige**
  **Ube-shi, Yamaguchi 755-8633 (JP)**
- **NAKAYAMA, Tomonori**
  **Ube-shi, Yamaguchi 755-8633 (JP)**
- **KAWABATA, Akira**
  **Ube-shi, Yamaguchi 755-8633 (JP)**
- **TAKASAKI, Susumu**
  **Ube-shi, Yamaguchi 755-8633 (JP)**
- **HIROSHIGE, Kensuke**
  **Ube-shi, Yamaguchi 755-8633 (JP)**

(74) Representative: **Mai, Dörr, Besier**
**Patentanwälte**
**Steuerberater/Wirtschaftsprüfer**
**John-F.-Kennedy-Straße 4**
**65189 Wiesbaden (DE)**

# (54) POLYIMIDE SEAMLESS BELT AND PROCESS FOR PRODUCTION THEREOF, AND POLYIMIDE PRECURSOR SOLUTION COMPOSITION

(57) The present invention relates to a seamless belt formed of a polyimide comprising a repeating unit represented by the formula (1):

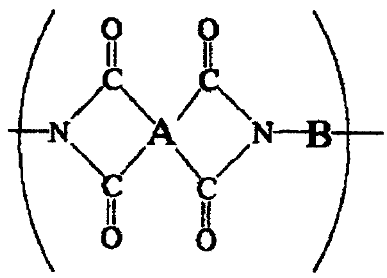

Formula (1)

wherein25 mol% to 95 mol% of A is a tetravalent unit represented by the formula (2):

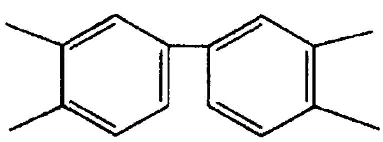

Formula (2)

;

75 mol% to 5 mol% of A is a tetravalent unit represented by the formula (3):

EP 2 653 491 A1

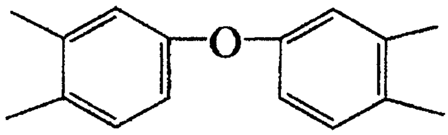

Formula (3)

;

15 mol% to 95 mol% of B is a divalent unit represented by the formula (4):

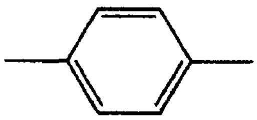

Formula (4)

;

and 85 mol% to 5 mol% of B is a divalent unit represented by the formula (5):

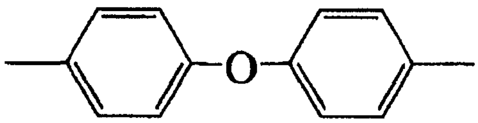

Formula (5)

.

**Description**

Technical Field

The present invention relates to a seamless belt of a polyimide of the specific chemical composition, a process for producing the seamless belt, and a polyimide precursor solution composition. According to the present invention, a polyimide seamless belt having very high toughness may be easily and reliably produced even in the case where a polyimide precursor solution composition comprises a polyamic acid solution having a high concentration and a low viscosity. The seamless belt may be suitably used as an intermediate transfer belt or a fixing belt of an electrophotographic device, which requires high toughness.

Background Art

A polyimide has excellent properties such as heat resistance, chemical resistance, electrical properties and mechanical properties, and therefore it has been suitably used for electrical/ electronic parts, and the like. Among them, because of low coefficient of thermal expansion and high mechanical strength, an aromatic polyimide film prepared from 3, 3', 4, 4'- biphenyltetracarboxylic dianhydride and p- phenylenediamine has been suitably used for a flexible substrate for TAB, a fixing belt of a copying machine, and the like, which require dimensional stability and mechanical strength.

Patent Literature 1 discloses an aromatic polyimide having improved long- term durability as compared to a conventional seamless belt prepared from 3, 3', 4, 4'- biphenyltetracarboxylic dianhydride and p- phenylenediamine, in response to higher speed rotation of a seamless tube which is a rotational motion transmission member of various precision instruments such as electrical/ electronic devices, electronic copying machines, and the like. The aromatic polyimide comprises 3, 4'- diaminodiphenyl ether in an amount of preferably 5 mol% or more, particularly preferably from 20 mol% to 80 mol%, based on the total molar quantity of the diamine component, and has low strength at break.

Patent Literatures 2 and 3 disclose a process for producing an aromatic polyimide film from 3, 3', 4, 4'- biphenyltetracarboxylic dianhydride and p- phenylenediamine, which is used for a fixing belt of a copying machine, etc.

However, it is desirable to further improve the formability and toughness of the aromatic polyimide film prepared from 3, 3', 4, 4'- biphenyltetracarboxylic dianhydride and p- phenylenediamine.

Patent Literature 4 discloses a polyimide seamless belt, which is produced using a solution of a polyamic acid prepared from 3, 3', 4, 4'- biphenyltetracarboxylic dianhydride, 4, 4'- oxydianiline (4, 4'- diaminodiphenyl ether) and 2, 4- toluenediamine. Patent Literature 4 also discloses that a polyimide seamless belt which is produced using a solution of a polyamic acid prepared from 3, 3', 4, 4'- biphenyltetracarboxylic dianhydride and 4, 4'- oxydianiline is inferior in mechanical properties (Reference Example 1) and a polyimide seamless belt cannot be produced when using a solution of an amic acid oligomer having the same composition and a lower molecular weight (i.e. a solution of a polyamic acid having a lower inherent viscosity) (Reference Example 2) .

Patent Literatures 5 and 6 disclose a polyimide seamless belt, which is produced from 4, 4'- oxydiphthalic dianhydride, 3, 4, 3', 4'- biphenyltetracarboxylic dianhydride and p- phenylenediamine. However, the polyimide seamless belt is produced using a solution composition of a polyamic acid having a relatively high inherent viscosity (i.e. having a high molecular weight) . Patent Literature 5 also discloses that a problem arises, for example, an expansion occurs unless dehydration/ imidization is performed by heating the polyamic acid solution composition at a low temperature of lower than 270 °C, for example, for a long period of time to remove the solvent such that the residual solvent content is 8 wt% or less, and then heating the composition (residue) at a high temperature (Comparative Example 8 of Patent Literature 5) .

Patent Literature 7 discloses a polyimide copolymer, as a polyimide to be used as an insulating material, which is produced from 4, 4'- oxydiphthalic dianhydride and 3, 4, 3', 4'- biphenyltetracarboxylic dianhydride, and 4, 4'- oxydianiline or p- phenylenediamine. In Example 6, for example, a polyimide produced from 4, 4'- oxydiphthalic dianhydride (25 mol%) and 3, 4, 3', 4'- biphenyltetracarboxylic dianhydride (75 mol%), and p- phenylenediamine is disclosed. However, the polyimide is produced using phthalic acid as an end- capping agent, and therefore the polyimide does not have adequate mechanical properties. Additionally, Patent Literature 7 discloses that the polyimide is produced using one diamine component (either 4, 4'- oxydianiline or p- phenylenediamine) . Patent Literature 7 does not disclose that a polyimide having higher toughness may be produced from 4, 4'- oxydiphthalic dianhydride and 3, 4, 3', 4'- biphenyltetracarboxylic dianhydride in the specific ratio, and 4, 4'- oxydianiline and p- phenylenediamine in the specific ratio.

Citation List

Patent Literature

Patent Literature 1: JP- A- 2006- 307114
Patent Literature 2: JP- A- 2003- 89125
Patent Literature 3: JP- A- 2007- 240845
Patent Literature 4: JP- A- 2009- 221397
Patent Literature 5: JP- A- 2010- 85450
Patent Literature 6: WO2008/120787
Patent Literature 7: JP- A- H03- 157428

Summary of the Invention

Problems to be Solved by the Invention

An objective of the present invention is to provide a seamless belt of a polyimide of the specific chemical composition, which may provide a seamless belt having very high toughness easily and reliably even when using a polyimide precursor solution composition comprising a polyamic acid solution which has a high concentration and a low viscosity; a process for producing the seamless belt; and a polyimide precursor solution composition to be used for the production.

Means for Solving the Problems

The present invention relates to the following items.

[1] A seamless belt formed essentially of a polyimide comprising a repeating unit represented by the formula (1):

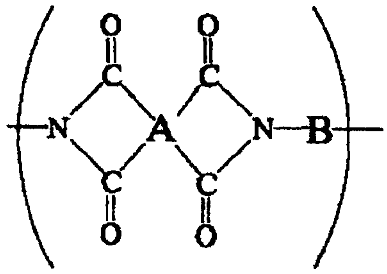

Formula (1)

wherein 25 mol% to 95 mol% of A is a tetravalent unit represented by the formula (2):
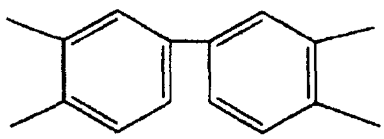

Formula (2)

;

75 mol% to 5 mol% of A is a tetravalent unit represented by the formula (3):
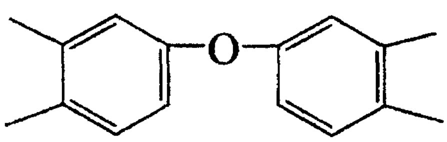

Formula (3)

;

15 mol% to 95 mol% of B is a divalent unit represented by the formula (4):

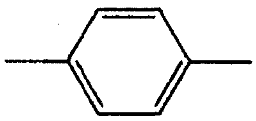

Formula (4)

;

and 85 mol% to 5 mol% of B is a divalent unit represented by the formula (5):

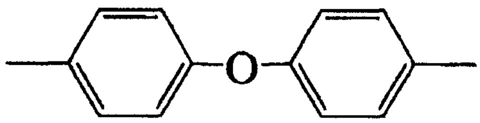

Formula (5)

.

[2] The seamless belt as described in [1], wherein in the formula (1),

25 mol% to 95 mol% of A is a tetravalent unit represented by the formula (2);
75 mol% to 5 mol% of A is a tetravalent unit represented by the formula (3);
0 mol% to 10 mol% of A is a tetravalent unit of an aliphatic tetracarboxylic acid, from which carboxyl groups have been removed;
15 mol% to 95 mol% of B is a divalent unit represented by the formula (4);
85 mol% to 5 mol% of B is a divalent unit represented by the formula (5); and
0 mol% to 10 mol% of B is a divalent unit of an aliphatic diamine, from which amino groups have been removed.

[3] The seamless belt as described in [1] or [2], wherein the seamless belt has a tensile energy at break of 100 $MJ/m^3$ or higher.
[4] The seamless belt as described in any one of [1] to [3], wherein the seamless belt is an intermediate transfer belt of an electrophotographic device.
[5] The seamless belt as described in any one of [1] to [3], wherein the seamless belt is a fixing belt of an electrophotographic device.

[6] A process for producing a seamless belt, comprising steps of:

forming a seamless coating film on a surface of a substrate, wherein the coating film is formed of a polyimide precursor solution composition comprising a polyamic acid solution in which a polyamic acid comprising a repeating unit represented by the formula (6):

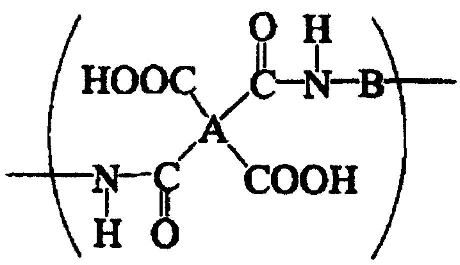

Formula (6)

wherein

25 mol% to 95 mol% of A is a tetravalent unit represented by the formula (2);
75 mol% to 5 mol% of A is a tetravalent unit represented by the formula (3);
15 mol% to 95 mol% of B is a divalent unit represented by the formula (4); and
85 mol% to 5 mol% of B is a divalent unit represented by the formula (5);

is dissolved in an organic solvent; and
heating the seamless coating film, to provide a polyimide seamless belt.

[7] The process for producing a seamless belt as described in [6], wherein the polyimide precursor solution composition comprises a pyridine compound and/or an imidazole.
[8] The process for producing a seamless belt as described in [6] or [7], wherein the polyamic acid in the polyamic acid solution has an inherent viscosity of 0.4 or lower.
[9] The process for producing a seamless belt as described in any one of [6] to [8], wherein the polyamic acid solution has a solid content in terms of polyimide of from 20 wt% to 60 wt%, and has a solution viscosity at 30 °C of 50 Pa·sec or lower.
[10] The process for producing a seamless belt as described in any one of [6] to [9], wherein the highest heating temperature in the heat treatment is 250 °C or lower.
[11] The process for producing a seamless belt as described in any one of [6] to [10], wherein the seamless belt is produced by rotational molding.

[12] A polyimide precursor solution composition comprising a polyamic acid solution in which a polyamic acid comprising a repeating unit represented by the formula (6) is dissolved in an organic solvent, wherein
the polyamic acid in the polyamic acid solution has an inherent viscosity of 0.4 or lower.
[13] The polyimide precursor solution composition as described in [12], wherein the polyamic acid solution has a solid content in terms of polyimide of from 20 wt% to 60 wt%, and has a solution viscosity at 30 °C of 50 Pa·sec or lower.

<u>Effect of the Invention</u>

According to the present invention, there may be provided a seamless belt of a polyimide having the specific chemical structure and having very high toughness; a process for producing the seamless belt; and a polyimide precursor solution composition to be used for the production. In addition, according to the present invention, a polyimide seamless belt having very high toughness may be easily and reliably produced even when using a polyimide precursor solution composition comprising a polyamic acid solution which has a high concentration and a low viscosity. The seamless belt of the present invention may be suitably used as an intermediate transfer belt or a fixing belt of an electrophotographic device, which requires high toughness.

<u>Description of Embodiments</u>

The polyimide comprised in the seamless belt of the present invention comprises a repeating unit represented by the formula (1) . In other words, the polyimide of the present invention is formed from a tetracarboxylic acid component comprising 25 mol% to 95 mol%, preferably 30 mol% to 95 mol%, more preferably 40 mol% to 85 mol% of 3, 3', 4, 4'- biphenyltetracarboxylic acids and 75 mol% to 5 mol%, preferably 70 mol% to 5 mol%, more preferably 60 mol% to 15 mol% of 4, 4'- oxydiphthalic acids based on 100 mol% of the total amount of the tetracarboxylic acid component, and a diamine component comprising 15 mol% to 95 mol%, preferably 15 mol% to 80 mol%, more preferably 15 mol% to 70 mol% of p- phenylenediamines and 85 mol% to 5 mol%, preferably 85 mol% to 20 mol%, more preferably 85 mol% to 30 mol% of 4, 4'- oxydianiline based on 100 mol% of the total amount of the diamine component.
The "tetracarboxylic acids" and the "diamines" as used herein include derivatives to be used as a tetracarboxylic acid component for a polyimide such as tetracarboxylic acids, dianhydrides thereof and esterified compounds thereof, and derivatives to be used as a diamine component for a polyimide such as diamines and diisocyanate, respectively.
In addition, the tetracarboxylic acid component and the diamine component may comprise other tetracarboxylic acids and other diamines, respectively, as long as the effect of the present invention would not be impaired. However, each of these components generally comprises other tetracarboxylic acids or diamines in an amount of 10 mol% or less, preferably 5 mol% or less, more preferably 3 mol% or less, particularly preferably 0 mol%. Examples of the other tetracarboxylic acids include aliphatic tetracarboxylic dianhydrides such as cyclobutane- 1, 2, 3, 4- tetracarboxylic dianhydride, 1, 2, 4, 5- cyclohexane tetracarboxylic dianhydride, dicyclohexyl- 3, 3', 4, 4'- tetracarboxylic dianhydride, 1, 2, 4, 5- cyclohexane tetracarboxylic- 1, 2: 4, 5- dianhydride, 1, 2, 3, 4- cyclobutane tetracarboxylic dianhydride, and bicyclo [2.2.2] octo- 7- ene- 2, 3; 5, 6- tetracarboxylic dianhydride. Examples of the other diamines include aliphatic diamines such as 1, 6- diaminohexane, 1, 4- diaminobutane, 1, 3- diaminopropane, trans- 1, 4- diaminocyclohexane, cis- 1, 4- diaminocyclohexane, 1, 10- decamethylene diamine, 1, 3- bis (aminomethyl) cyclohexane, 1, 4- bis (aminomethyl) cyclohexane, and polyoxypropylene diamine which preferably has a weight average molecular weight of 500 or less.
According to the present invention, the polyimide comprised in the seamless belt, or the polyamic acid in the

polyamic acid solution comprised in the polyimide precursor solution composition as the starting material has the specific chemical composition as described above, thereby providing a polyimide seamless belt having further improved formability and toughness. The "polyamic acid" as used herein includes a so-called amic acid oligomer having a low molecular weight.

In the present invention, a breaking energy at tensile break (tensile energy at break) per unit volume in the form of a film is used as one index of toughness. That is to say, the polyimide comprised in the seamless belt of the present invention (the polyimide of the present invention) has extremely high breaking energy per unit volume. In other words, the polyimide of the present invention is not easily broken when a force is applied to the polyimide from the outside. In addition, in the present invention, a tensile elastic modulus, a tensile strength at break, and a tensile elongation at break are used as other indexes of toughness. The polyimide of the present invention is particularly excellent in any of these mechanical properties.

That is to say, the polyimide comprised in the seamless belt of the present invention may preferably have a tensile energy at break of 100 $MJ/m^3$ or more, more preferably 110 $MJ/m^3$ or more, particularly preferably 140 $MJ/m^3$ or more, in the form of a film. In addition, the polyimide may preferably have a tensile strength at break of 180 MPa or more, more preferably 230 MPa or more, and may preferably have a tensile elongation at break of 50 % or more, more preferably 70 % or more, and may preferably have a tensile elastic modulus of 2.5 GPa or more, more preferably 3.5 GPa or more. Such particularly excellent toughness and mechanical properties may be achieved by the specific chemical composition of the present invention, and may not be achieved when using another tetracarboxylic acid component and/or another diamine component.

Meanwhile, in view of productivity and formability, it is preferred that a polyamic acid solution having a high concentration and a low viscosity is used. However, it is generally difficult to provide a polyimide having adequate mechanical properties when the polyamic acid has a lower inherent viscosity, or has a lower molecular weight. That is to say, as for polyimides, it is generally difficult to achieve both lower viscosity of the polyamic acid solution, or lower molecular weight of the polyamic acid as the starting material, and mechanical properties.

However, in the case where the polyimide comprised in the seamless belt of the present invention comprises a repeating unit represented by the formula (1), that is, the polyamic acid in the polyamic acid solution of the present invention comprised in the polyimide precursor solution composition as the starting material comprises a repeating unit represented by the formula (6), a polyimide seamless belt having very high toughness may be easily and reliably produced even when the polyamic acid has a low molecular weight and has an inherent viscosity of 0.4 or lower. As described later, the polyamic acid of the present invention has a good solubility, which seems to be one of the causes which enable the lower molecular weight of the polyamic acid, which in turn enable the use of the polyamic acid solution having a high concentration and a low viscosity and the production of the polyimide seamless belt having high toughness in that case.

The polyamic acid comprised in the polyamic acid solution of the present invention is formed from a tetracarboxylic acid component comprising 25 mol% to 95 mol%, preferably 30 mol% to 95 mol%, more preferably 40 mol% to 85 mol% of 3, 3', 4, 4'- biphenyltetracarboxylic acids and 75 mol% to 5 mol%, preferably 70 mol% to 5 mol%, more preferably 60 mol% to 15 mol% of 4, 4'- oxydiphthalic acids based on 100 mol% of the total amount of the tetracarboxylic acid component, and a diamine component comprising 15 mol% to 95 mol%, preferably 15 mol% to 80 mol%, more preferably 15 mol% to 70 mol% of p- phenylenediamines and 85 mol% to 5 mol%, preferably 85 mol% to 20 mol%, more preferably 85 mol% to 30 mol% of 4, 4'- oxydianiline based on 100 mol% of the total amount of the diamine component. In the case of a polyamic acid having a composition outside the range, it may be difficult to produce a polyimide seamless belt having high toughness easily and reliably due to a problem such as the occurrence of cracks during the formation of the seamless belt when a polyamic acid solution in which the polyamic acid has a lower inherent viscosity and a lower molecular weight is used, in particular.

In addition, the tetracarboxylic acid component and the diamine component may comprise other tetracarboxylic acids and other diamines, including aliphatic tetracarboxylic dianhydrides and aliphatic diamines, respectively, as long as the effect of the present invention would not be impaired, that is, generally in an amount of about 10 mol% or less, as described above.

A polyimide precursor solution composition to be used for the production of the polyimide seamless belt of the present invention (the polyimide precursor solution composition of the present invention) comprises a polyamic acid solution in which a polyamic acid comprising a repeating unit represented by the formula (6) is dissolved in an organic solvent, and may comprise a filler, which is optionally added as necessary, and the like. In other words, the polyimide precursor solution composition of the present invention is a polyamic acid solution in which a polyamic acid comprising a repeating unit represented by the formula (6) is dissolved in an organic solvent, or a solution composition in which an additive such as a filler is added to the polyamic acid solution as necessary.

The polyamic acid solution is a solution in which a polyamic acid and/or an amic acid oligomer are homogeneously dissolved in an organic solvent. The polyamic acid solution, particularly the polyamic acid solution comprising the polyamic acid having a relatively high molecular weight, may be suitably prepared by reacting a tetracarboxylic acid component and a diamine component in an organic solvent at a temperature of 120°C or lower, preferably 100°C or

lower, more preferably 80°C or lower, to suppress the imidization, for example, for about 0.1 to 50 hours.

The polyamic acid solution comprising the amic acid oligomer having a relatively low molecular weight may be suitably prepared by performing the reaction in the presence of water, thereby adjusting the molecular weight to a low molecular weight. One preferable specific example is the process as described in JP- A- S57- 131248, in which substantially equimolar amounts of a tetracarboxylic dianhydride and a diamine are reacted at a temperature of 100 °C or lower in an organic solvent containing about 0.5 mole to about 40 mole of water per mole of the anhydride, to provide a homogeneous reaction solution, and then free water is removed from the reaction solution. Another preferable specific example is the process as described in JP- A- 2008- 144159, in which a diamine is reacted with a molar excess of a tetracarboxylic dianhydride in a solvent containing more than 1/3 mole of water per mole of the tetracarboxylic dianhydride, and then a diamine, or a diamine and a tetracarboxylic dianhydride are added to the reaction solution so that the molar amount of the diamine is substantially equal to the molar amount of the tetracarboxylic dianhydride, and the diamine and the tetracarboxylic dianhydride are reacted.

It is preferred that the molar amount of the diamine component is substantially equal to the molar amount of the tetracarboxylic acid component in the polyamic acid solution of the present invention. More specifically, the molar ratio of the diamine component to the tetracarboxylic acid component may be preferably from 1:0.95 to 1:1.05, more preferably from 1:0.98 to 1:1.02. When the molar ratio is outside the range, the mechanical properties of the polyimide film (polyimide seamless belt) obtained may be degraded.

In addition, the polyamic acid solution composition of the present invention may comprise an unreacted diamine component and/or an unreacted tetracarboxylic acid component in a small amount, as long as the effect of the present invention would not be impaired. However, an endcapping agent such as phthalic acid is not preferred because adequate mechanical properties may not be achieved.

The solvent to be used for the preparation of the polyamic acid solution may be preferably an organic polar solvent having a boiling point of 300°C or lower at atmospheric pressure, in which the polyamic acid is soluble. Examples of the solvent include solvents containing a nitrogen atom in the molecule such as N, N- dimethylacetamide, N, N-diethylacetamide, N, N- dimethylformamide, N, N- diethylformamide, N- methyl- 2- pyrrolidone, 1, 3- dimethyl- 2- imidazolidinone, and N- methyleaprolactam; solvents containing a sulfur atom in the molecule such as dimethyl sulfoxide, diethyl sulfoxide, dimethyl sulfone, diethyl sulfone, and hexamethyl sulfolamide; solvents which are phenols such as cresol, phenol, and xylenol; solvents containing an oxygen atom in the molecule such as diethylene glycol dimethyl ether (diglyme), triethylene glycol dimethyl ether (triglyme), and tetraglyme; and other solvents such as acetone, dimethylimidazoline, methanol, ethanol, ethylene glycol, dioxane, tetrahydrofuran, pyridine, and tetramethylurea. These solvents may be suitably used alone or in combination of two or more types thereof.

The solid content based on the polyamic acid in the polyamic acid solution of the present invention may be preferably, but not limited to, 5 wt% or more, more preferably 7 wt% or more, further preferably 10 wt% or more, relative to the total amount of the polyimide precursor and the solvent. When the solid content is less than 5 wt%, the productivity may be reduced.

The polyamic acid in the polyamic acid solution of the present invention may have a high molecular weight, or may have a low molecular weight. The polyamic acid having an inherent viscosity ($\eta_{inh}$) of from 0.05 to 3.5, preferably from 0.10 to 3.0, more preferably from 0.15 to 2.5, may be suitably used. In addition, a part of the amic acid structures (50 mol% or less, preferably 20 mol% or less, more preferably 5 mol% or less) may undergo a dehydration reaction and form an imide ring, because the polyamic acid has high solubility in organic solvents, whether the polyamic acid has a low molecular weight or a high molecular weight, and the solubility is rarely lowered when an imide ring is formed. Because of the good solubility, the polyamic acid solution, or the polyimide precursor solution composition of the present invention may exhibit good storage stability, while suppressing the gelation during the storage, and have very good formability

Accordingly, as for the polyamic acid solution of the present invention, a polyamic acid solution having a low concentration, as well as a polyamic acid solution having a high concentration and a low solution viscosity, which has a solid content in terms of polyimide of from 20 wt% to 60 wt%, preferably from 25 wt% to 60 wt%, more preferably from 30 wt% to 60 wt%, and a solution viscosity at 30 °C of 50 Pa·sec or lower, preferably 30 Pa·sec or lower, more preferably 20 Pa·sec or lower, may be suitably used. In addition, the lower limit of the solution viscosity may be preferably, but not limited to, 0.5 Pa·sec or higher, generally 1 Pa·sec or higher.

In addition, according to the present invention, a polyimide seamless belt having very high toughness may be easily and reliably produced even when the polyamic acid has a low molecular weight and has an inherent viscosity of 0.4 or lower, as described above.

The process for producing the seamless belt of the present invention comprises forming a seamless coating film on a surface of a substrate, wherein the coating film is formed of a polyimide precursor solution composition comprising a polyimide precursor solution in which a polyamic acid comprising a repeating unit represented by the formula (6) is dissolved in an organic solvent; and heating the seamless coating film.

The polyimide precursor solution composition of the present invention comprises the polyamic acid solution as

described above, in which a polyamic acid comprising a repeating unit represented by the formula (6) is dissolved in an organic solvent, and may comprise other additives as necessary. Accordingly, a solvent used for the preparation of the polyamic acid solution may be suitably used as the solvent in the polyimide precursor solution composition of the present invention. The other additives, which may be added to the polyamic acid solution as necessary, are not limited. The polyimide precursor solution composition of the present invention may comprise a fine-powdered filler formed of an organic resin or an inorganic material, and a known resinous additive component such as a pigment, a lubricant and an antifoamer, depending on the intended application.

In some cases, the polyimide precursor solution composition of the present invention may preferably further comprise a pyridine compound and/or an imidazole. That is preferred because, in the case where the polyimide precursor solution composition comprises a pyridine compound and/or an imidazole, the seamless belt obtained may have a greater breaking energy even when the coating film formed of the polyimide precursor solution composition is heated at a relatively low temperature, and therefore the heat treatment temperature for the production of the seamless belt may be lowered.

The amount of the pyridine compound and/or the imidazole added may be preferably, but not limited to, from 0.01 molar equivalent to 5.0 molar equivalent, more preferably from 0.01 molar equivalent to 1.0 molar equivalent, relative to the amic acid structure in the polyamic acid (per mole of the amic acid structure). The number of amic acid structures in the polyamic acids may be calculated on the assumption that two amic acid structures would be formed per one molecule of the tetracarboxylic acid component as the starting material.

The pyridine compound is a compound having a pyridine skeleton in the chemical structure. Preferable examples of the pyridine compound include pyridine, 3- pyridinol, quinoline, isoquinoline, quinoxaline, 6- tert- butyl quinoline, acridine, 6- quinoline carboxylic acid, 3, 4- lutidine, and pyridazine.

Preferable examples of the imidazole compound to be suitably used include 1, 2- dimethylimidazole, 2- ethyl- 4- methylimidazole, 4- ethyl- 2- methylimidazole, 2- phenylimidazole, 1- methylimidazole, 2- methylimidazole, and 1- methyl- 4- ethylimidazole.

These pyridine compounds and imidazole compounds may be used alone or in combination of two or more types thereof.

In view of handling properties, the solution viscosity at 30 °C of the polyimide precursor solution composition may be preferably, but not limited to, 1000 Pa·sec or lower, more preferably from 0.5 Pa·sec to 500 Pa·sec, further preferably from 1 Pa·sec to 300 Pa·sec, particularly preferably from 3 Pa·sec to 200 Pa·sec. When the solution viscosity is higher than 1000 Pa·sec, the composition may lose the fluidity, and therefore it may be difficult to uniformly apply the composition onto a metal, a glass, and the like. When the solution viscosity is lower than 0.5 Pa·sec, dripping, cissing, and the like may occur when applying the composition onto a metal, a glass, and the like, and it may be difficult to provide a polyimide seamless belt having high properties.

The characteristic of the process for producing the seamless belt of the present invention lies in the use of a polyamic acid solution (polyimide precursor solution) in which a polyamic acid comprising a repeating unit represented by the formula (6) is dissolved in an organic solvent. Any known method for forming a seamless belt may be suitably employed. For example, a seamless belt may be suitably produced by rotational molding, i.e. a method comprising forming an endless tubular coating film (seamless coating film) of a polyimide precursor solution composition on a surface (inner surface or outer surface) of a cylindrical mold, which functions as a substrate, while rotating the mold;

heating the seamless coating film at a relatively low temperature to effect the removal of the solvent, thereby forming a self-supporting film (the film in a state of not flowing; the polymerization and partial imidization reaction, as well as the removal of the solvent, proceed.); and

heating the self-supporting film on the substrate, or alternatively, the self-supporting film which is peeled from the substrate, if necessary, to effect dehydration/imidization.

The terms "removal of the solvent" and "dehydration/imidization" as used herein do not mean that in the steps, only the removal of the solvent proceeds and only the dehydration/imidization proceeds, respectively. In the solvent removal step, the dehydration/imidization usually proceeds to some extent. In the dehydration/imidization step, the removal of the residual solvent usually proceeds.

As for the heat treatment conditions, in general, the polyimide precursor solution composition may be preferably heated at a temperature of 100 °C or higher, preferably from 120 °C to 600 °C, more preferably from 150 °C to 500 °C, further preferably from 150 °C to 350 °C, for from 0.01 hours to 30 hours, preferably from 0.01 hours to 10 hours, preferably while increasing the temperature stepwise. According to the present invention, a seamless belt having high toughness may be easily and reliably produced when the polyimide precursor solution composition is heated at a relatively low temperature of 250 °C or lower, in particular, preferably from 150 °C to 250 °C.

The polyimide comprised in the seamless belt of the present invention may have very high toughness, and therefore may be particularly suitably used as a seamless belt for intermediate transfer, fixing, or transport in an electrophotographic device such as a copying machine, and the like.

The seamless belt of the present invention is formed essentially of the polyimide of the present invention, which

comprises a repeating unit represented by the formula (1), and may comprise other additives as necessary. Additionally, another resin layer and/or a metal layer may be laminated on the seamless belt of the present invention.

The thickness of the seamless belt of the present invention may be appropriately selected depending on the intended use, and may be generally from about 20 μm to about 200 μm.

When the seamless belt of the present invention is used as an intermediate transfer belt of an electrophotographic device, a conductive filler may be preferably added to the seamless belt so that semiconductivity is imparted to the seamless belt, specifically, the seamless belt has a surface resistivity of from $10^8$ Ω/□ to $10^{16}$ Ω/□ and a volume resistivity of from $10^8$ Ω·cm to $10^{16}$ Ω·cm.

A conductive or semiconductive particle which is used for a conventional intermediate transfer seamless belt may be used as the conductive filler in the present invention. Examples thereof include, but not limited to, carbon blacks such as ketjen black and acetylene black, metals such as aluminum and nickel, metal oxide compounds such as tin oxide, and potassium titanate. These may be used alone or in combination of two or more types thereof. In the present invention, a carbon black may be preferably used as the conductive filler, and, among them, a carbon black having an average primary particle size of from 5 nm to 100 nm, particularly preferably from 10 nm to 50 nm, is preferred. When the average primary particle size is more than 100 nm, the uniformity of mechanical properties and electric resistance may be liable to be inadequate.

The amount of the conductive filler may vary depending on the type, particle size, and dispersion state of the filler. The amount of the conductive filler may be preferably from 1 to 50 parts by weight, more preferably from 2 to 30 parts by weight, relative to 100 parts by weight of the polyimide (solid content). In the present invention, the surface resistivity and the volume resistivity may be controlled to within the range suitable for an intermediate transfer belt ($10^8$ Ω/□ to $10^{16}$ Ω/□, and $10^8$ Ω·cm to $10^{16}$ Ω·cm) by a combination of the selection of the conductive filler and its appropriate amount.

When the seamless belt of the present invention is used as a fixing belt of an electrophotographic device, a filler such as silica, boron nitride, aluminum nitride, silicon nitride and alumina may be preferably added to the seamless belt so that thermal conductivity is imparted to the seamless belt, and a fluororesin powder, for example, may be preferably added to the seamless belt so that rubber elasticity is imparted to the seamless belt, and a metal foil as a heating element may be preferably laminated on the seamless belt.

The amount of the filler may be preferably from 1 to 50 parts by weight, more preferably from 2 to 30 parts by weight, relative to 100 parts by weight of the polyimide (solid content).

The seamless belt may preferably have a thermal conductivity of 0.15 W/mK or more, preferably 0.20 W/mK or more.

In addition, when the seamless belt is used as a fixing belt of an electrophotographic device, the seamless belt may preferably have a rubber elastic layer or a release layer laminated on the surface. The release layer (parting layer) is not limited as long as the layer improves the releasability of the surface of the seamless belt, and a known material including polytetrafluoroethylene (PTFE), and a modified material thereof such as tetrafluoroethylene- perfluoroalkylvinylether copolymer (PFA), tetrafluoroethylene- ethylene copolymer (ETFE), tetrafluoroethylene- hexafluoropropylene copolymer (FEP), tetrafluoroethylene- vinylidene fluoride copolymer (TFE/VdF), tetrafluoroethylene- hexafluoropropylene- perfluoroalkylvinylether copolymer (EPA), polychlorotrifluoroethylene (PCTFE), chlorotrifluoroethylene- ethylene copolymer (ECTFE), chlorotrifluoroethylene- vinylidene fluoride copolymer (CTFE/VdF), polyvinylidene fluoride (PVdF), and polyvinyl fluoride (PVF) may be suitably used for the release layer. The rubber elastic layer may also be formed of the material as described above. The surface layer may preferably comprise a conductive filler.

## Examples

Hereinafter, the present invention will be more specifically described with reference to Examples and Comparative Examples, but the present invention is not limited to these Examples.

The methods for measuring the properties, which was used in the following examples, will be described below.

<Solid Content>

A sample solution (the weight is referred to as "w1") was heated at 120°C for 10 minutes, 250°C for 10 minutes, and then 350°C for 30 minutes in a hot air dryer, and the weight of the sample after the heat treatment (the weight is referred to as "w2") was measured. And then, the solid content [wt%] was calculated by the following formula.

$$\text{Solid content [wt\%]} = (w2/w1) \times 100$$

<Inherent Viscosity>

A sample solution was diluted to a concentration of 0.5 g/dl based on the solid content (the solvent: NMP). The flowing time ($T_1$) of the diluted solution was measured at 30°C using a Cannon-Fenske viscometer No. 100. The inherent viscosity was calculated by the following formula from the flowing time ($T_1$) of the diluted solution as measured and the flowing time ($T_0$) of the blank NMP.
$$\text{Inherent viscosity} = \{\ln(T_1/T_0)\} / 0.5$$

<Solution Viscosity (Rotational Viscosity)>

The solution viscosity was measured at 30°C using an E type viscometer manufactured by Tokimec, Inc.

<Observation of State of Seamless Belt>

The state of the seamless belt obtained was visually observed. In the observation of the state of the seamless belt, a seamless belt in which no foaming nor crack were observed was evaluated as O, a seamless belt in which foaming or crack were observed in about 30 % of the whole area was evaluated as Δ, and a seamless belt in which foaming or crack were observed more than this (Δ) was evaluated as ×.

<Mechanical Properties (Tensile Test)>

The tensile test was performed in accordance with ASTM D882 using a tensile tester (RTC- 1225A, manufactured by Orientec Co., Ltd.) to determine the tensile elastic modulus, tensile elongation at break, and tensile strength at break.

<Determination of Tensile Energy at Break>

The tensile energy at break was determined in accordance with ASTM D882 using a tensile tester (RTC- 1225A, manufactured by Orientec Co., Ltd.) . The tensile energy at break was calculated based on "the method for the determination of tensile energy at break" in A2.1 of ASTM D882.
The abbreviations of the compounds used in the following examples are as follows:

s- BPDA: 3, 3', 4, 4'- biphenyltetracarboxylic dianhydride
ODPA: 4,4'-oxydiphthalic dianhydride
PPD: p-phenylenediamine
ODA: 4, 4'- oxydianiline (4, 4'- diaminodiphenyl ether)
HMD: 1,6-diaminohexane
TMD: 1,4-diaminobutane
1,2-DMZ: 1,2-dimethylimidazole
NMP: N- methyl- 2- pyrrolidone

<Example 1>

In a 500 mL (internal volume) glass reaction vessel equipped with a stirrer and a nitrogen-gas charging/discharge tube was placed 400 g of NMP as a solvent. And then, 6.88 g (0.064 mol) of PPD and 29.72 g (0.148 mol) of ODA, and 19.73 g (0.064 mol) of ODPA and 43.67 g (0.148 mol) of s-BPDA were added thereto, and the resulting mixture was stirred at 50 °C for 10 hours to provide a polyamic acid solution having a solid content of 18.3 wt%, a solution viscosity of 5.1 Pa·sec, and an inherent viscosity of 0.68.
The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150°C for 10 min, 200 °C for 10 min, 250 °C for 10 min, and then 350 °C for 10 min, while rotating the mold at 200 rpm, to provide a polyimide seamless belt having a thickness of 50 μm.
The properties of the polyimide seamless belt were evaluated.
The results are shown in Table 1.

<Example 2>

The polyamic acid solution obtained in Example 1 was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, and then 200 °C for 30 min, while rotating the mold at 200 rpm, to provide a polyimide seamless belt having a thickness of 50 μm.

The properties of the polyimide seamless belt were evaluated.

The results are shown in Table 1.

<Example 3>

In a 500 mL glass reaction vessel equipped with a stirrer, a stirring blade, a reflux condenser and a nitrogen-gas charging tube were placed 335 g of NMP as a solvent, 1.32 g of water, 41.17 g of s-BPDA and 14.01 g of ODA (molar ratio of water [water / the acid component]: 3/4; water content: 0.48 wt%; molar ratio of the acid component [the acid component / the diamine component]: 2/1). And then, the resulting mixture was stirred at a reaction temperature of 70 °C for 3 hours for reaction. Subsequently, 35.03 g of ODA and 11.35 g of PPD were dissolved in the reaction solution, and then 30.88 g of s-BPDA and 32.56 g of ODPA were added thereto. And then, the resulting mixture was stirred at a reaction temperature of 50 °C for 20 hours to provide a polyamic acid solution having a solid content of 30.3 wt%, a solution viscosity of 5.7 Pa·sec, and an inherent viscosity of 0.21.

The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 1.

<Example 4>

The polyamic acid solution obtained in Example 3 was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, and then 200 °C for 30 min, while rotating the mold at 200 rpm, to provide a polyimide seamless belt having a thickness of 50 μm.

The properties of the polyimide seamless belt were evaluated.

The results are shown in Table 1.

<Example 5>

A polyimide precursor solution composition, which was prepared by adding 0.1 molar equivalent of isoquinoline to the polyamic acid solution obtained in Example 3 and stirring the resulting mixture at 25 °C for 4 hours, was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, and then 200 °C for 30 min, while rotating the mold at 200 rpm, to provide a polyimide seamless belt having a thickness of 50 μm.

The properties of the polyimide seamless belt were evaluated.

The results are shown in Table 1.

<Example 6>

A polyimide precursor solution composition, which was prepared by adding 0.1 molar equivalent of 1,2-DMZ to the polyamic acid solution obtained in Example 3 and stirring the resulting mixture at 25 °C for 4 hours, was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, and then 200 °C for 30 min, while rotating the mold at 200 rpm, to provide a polyimide seamless belt having a thickness of 50 μm.

The properties of the polyimide seamless belt were evaluated.

The results are shown in Table 1.

<Example 7>

In a 500 mL (internal volume) glass reaction vessel equipped with a stirrer and a nitrogen-gas charging/discharge tube was placed 400 g of NMP as a solvent. And then, 11.85 g (0.110 mol) of PPD and 21.94 g (0.110 mol) of ODA, and 33.98 g (0.110 mol) of ODPA and 32.23 g (0.110 mol) of s-BPDA were added thereto, and the resulting mixture was stirred at 50 °C for 10 hours to provide a polyamic acid solution having a solid content of 18.2 wt%, a solution viscosity of 5.0 Pa·sec, and an inherent viscosity of 0.65.

The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 1.

<Example 8>

In a 500 mL glass reaction vessel equipped with a stirrer, a stirring blade, a reflux condenser and a nitrogen-gas charging tube were placed 335 g of NMP as a solvent, 1.95 g of water, 42.54 g of s-BPDA and 14.48 g of ODA (molar ratio of water [water / the acid component]: 3/4; water content: 0.50 wt%; molar ratio of the acid component [the acid component / the diamine component]: 2/1). And then, the resulting mixture was stirred at a reaction temperature of 70 °C for 3 hours for reaction. Subsequently, 21.72 g of ODA and 19.55 g of PPD were dissolved in the reaction solution, and then 10.64 g of s-BPDA and 56.07 g of ODPA were added thereto. And then, the resulting mixture was stirred at a reaction temperature of 50 °C for 20 hours to provide a polyamic acid solution having a solid content of 30.1 wt%, a solution viscosity of 5.4 Pa·sec, and an inherent viscosity of 0.22.

The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 1.

<Example 9>

In a 500 mL (internal volume) glass reaction vessel equipped with a stirrer and a nitrogen-gas charging/discharge tube was placed 400 g of NMP as a solvent. And then, 17.41 g (0.161 mol) of PPD and 13.82 g (0.069 mol) of ODA, and 21.40 g (0.069 mol) of ODPA and 47.37 g (0.161 mol) of s-BPDA were added thereto, and the resulting mixture was stirred at 50 °C for 10 hours to provide a polyamic acid solution having a solid content of 18.1 wt%, a solution viscosity of 5.3 Pa·sec, and an inherent viscosity of 0.64.

The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 1.

<Example 10>

In a 500 mL glass reaction vessel equipped with a stirrer, a stirring blade, a reflux condenser and a nitrogen-gas charging tube were placed 335 g of NMP as a solvent, 2.05 g of water, 44.66 g of s-BPDA and 15.20 g of ODA (molar ratio of water [water / the acid component]: 3/4; water content: 0.52 wt%; molar ratio of the acid component [the acid component / the diamine component]: 2/1). And then, the resulting mixture was stirred at a reaction temperature of 70 °C for 3 hours for reaction. Subsequently, 7.60 g of ODA and 28.73 g of PPD were dissolved in the reaction solution, and then 33.49 g of s-BPDA and 35.32 g of ODPA were added thereto. And then, the resulting mixture was stirred at a reaction temperature of 50 °C for 20 hours to provide a polyamic acid solution having a solid content of 30.2 wt%, a solution viscosity of 5.2 Pa·sec, and an inherent viscosity of 0.23.

The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C

for 10 min, while rotating the mold at 200 rpm, to provide a polyimide seamless belt having a thickness of 50 μm.

The properties of the polyimide seamless belt were evaluated.

The results are shown in Table 1.

<Example 11>

In a 500 mL glass reaction vessel equipped with a stirrer, a stirring blade, a reflux condenser and a nitrogen-gas charging tube were placed 335 g of NMP as a solvent, 1.95 g of water, 41.54 g of s-BPDA and 14.14 g of ODA (molar ratio of water [water / the acid component]: 3/4; water content: 0.49 wt%; molar ratio of the acid component [the acid component / the diamine component]: 2/1). And then, the resulting mixture was stirred at a reaction temperature of 70 °C for 3 hours for reaction. Subsequently, 31.81 g of ODA, 11.45 g of PPD and 2.05 g of HMD were dissolved in the reaction solution, and then 31.16 g of s-BPDA and 32.85 g of ODPA were added thereto. And then, the resulting mixture was stirred at a reaction temperature of 50 °C for 20 hours to provide a polyamic acid solution composition having a solid content of 30.3 wt%, a solution viscosity of 6.4 Pa·sec, and an inherent viscosity of 0.25.

The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 1.

<Example 12>

In a 500 mL glass reaction vessel equipped with a stirrer, a stirring blade, a reflux condenser and a nitrogen-gas charging tube were placed 335 g of NMP as a solvent, 1.91 g of water, 41.67 g of s-BPDA and 14.18 g of ODA (molar ratio of water [water / the acid component]: 3/4; water content: 0.49 wt%; molar ratio of the acid component [the acid component / the diamine component]: 2/1). And then, the resulting mixture was stirred at a reaction temperature of 70 °C for 3 hours for reaction. Subsequently, 31.91 g of ODA, 11.49 g of PPD and 1.56 g of TMD were dissolved in the reaction solution, and then 31.25 g of s-BPDA and 32.95 g of ODPA were added thereto. And then, the resulting mixture was stirred at a reaction temperature of 50 °C for 20 hours to provide a polyamic acid solution composition having a solid content of 30.5 wt%, a solution viscosity of 7.3 Pa·sec, and an inherent viscosity of 0.24.

The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 1.

<Example 13>

In a 500 mL glass reaction vessel equipped with a stirrer, a stirring blade, a reflux condenser and a nitrogen-gas charging tube were placed 335 g of NMP as a solvent, 1.97 g of water, 42.94 g of s-BPDA and 14.61 g of ODA (molar ratio of water [water / the acid component]: 3/4; water content: 0.50 wt%; molar ratio of the acid component [the acid component / the diamine component]: 2/1). And then, the resulting mixture was stirred at a reaction temperature of 70 °C for 3 hours for reaction. Subsequently, 18.27 g of ODA, 19.73 g of PPD and 2.12 g of HMD were dissolved in the reaction solution, and then 10.73 g of s-BPDA and 56.59 g of ODPA were added thereto. And then, the resulting mixture was stirred at a reaction temperature of 50 °C for 20 hours to provide a polyamic acid solution composition having a solid content of 30.5 wt%, a solution viscosity of 7.2 Pa·sec, and an inherent viscosity of 0.24.

The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 1.

<Example 14>

In a 500 mL glass reaction vessel equipped with a stirrer, a stirring blade, a reflux condenser and a nitrogen-gas charging tube were placed 335 g of NMP as a solvent, 1.98 g of water, 43.07 g of s-BPDA and 14.66 g of ODA (molar ratio of water [water / the acid component]: 3/4; water content: 0.50 wt%; molar ratio of the acid component [the acid component / the diamine component]: 2/1). And then, the resulting mixture was stirred at a reaction temperature of 70 °C for 3 hours for reaction. Subsequently, 18.32 g of ODA, 19.79 g of PPD and 1.61 g of TMD were dissolved in the reaction solution, and then 10.77 g of s-BPDA and 56.77 g of ODPA were added thereto. And then, the resulting mixture was stirred at a reaction temperature of 50 °C for 20 hours to provide a polyamic acid solution composition having a solid content of 30.6 wt%, a solution viscosity of 6.3 Pa·sec, and an inherent viscosity of 0.23.

The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 1.

<Comparative Example 1>

In a 500 mL glass reaction vessel equipped with a stirrer, a stirring blade, a reflux condenser and a nitrogen-gas charging tube were placed 335 g of NMP as a solvent, 2.19 g of water, 47.69 g of s-BPDA and 8.77 g of PPD (molar ratio of water [water / the acid component]: 3/4; water content: 0.56 wt%; molar ratio of the acid component [the acid component / the diamine component]: 2/1). And then, the resulting mixture was stirred at a reaction temperature of 70 °C for 3 hours for reaction. Subsequently, 35.06 g of PPD was dissolved in the reaction solution, and then 35.77 g of s-BPDA and 37.71 g of ODPA were added thereto. And then, the resulting mixture was stirred at a reaction temperature of 50 °C for 20 hours to provide a polyamic acid solution having a solid content of 30.8 wt%, a solution viscosity of 6.7 Pa·sec, and an inherent viscosity of 0.25.

The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm. However, cracks occurred throughout the film, and a polyimide seamless belt could not be obtained.

The results are shown in Table 2.

<Comparative Example 2>

In a 500 mL glass reaction vessel equipped with a stirrer, a stirring blade, a reflux condenser and a nitrogen-gas charging tube were placed 335 g of NMP as a solvent, 1.80 g of water, 39.27 g of s-BPDA and 13.36 g of ODA (molar ratio of water [water / the acid component]: 3/4; water content: 0.46 wt%; molar ratio of the acid component [the acid component / the diamine component]: 2/1). And then, the resulting mixture was stirred at a reaction temperature of 70 °C for 3 hours for reaction. Subsequently, 53.46 g of ODA was dissolved in the reaction solution, and then 58.91 g of s-BPDA was added thereto. And then, the resulting mixture was stirred at a reaction temperature of 50 °C for 20 hours to provide a polyamic acid solution having a solid content of 31.0 wt%, a solution viscosity of 8.9 Pa·sec, and an inherent viscosity of 0.24.

The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm. However, cracks occurred in about 30 % of the whole area.

The properties of the polyimide seamless belt were evaluated.

The results are shown in Table 2.

<Comparative Example 3>

In a 500 mL glass reaction vessel equipped with a stirrer, a stirring blade, a reflux condenser and a nitrogen-gas charging tube were placed 335 g of NMP as a solvent, 2.22 g of water, 48.26 g of s-BPDA and 8.87 g of PPD (molar ratio of water [water / the acid component]: 3/4; water content: 0.56 wt%; molar ratio of the acid component [the acid component / the diamine component]: 2/1). And then, the resulting mixture was stirred at a reaction temperature of 70 °C for 3 hours for reaction. Subsequently, 35.48 g of PPD was dissolved in the reaction solution, and then 72.39 g of s-BPDA was added thereto. And then, the resulting mixture was stirred at a reaction temperature of 50 °C for 20 hours to provide a polyamic acid solution having a solid content of 30.3 wt%, a solution viscosity of 6.4 Pa·sec, and an inherent

viscosity of 0.23.

The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm. However, cracks occurred throughout the film, and a polyimide seamless belt could not be obtained.

The results are shown in Table 2.

<Comparative Example 4>

In a 500 mL glass reaction vessel equipped with a stirrer, a stirring blade, a reflux condenser and a nitrogen-gas charging tube were placed 335 g of NMP as a solvent, 1.82 g of water, 39.62 g of s-BPDA and 13.48 g of ODA (molar ratio of water [water / the acid component]: 3/4; water content: 0.47 wt%; molar ratio of the acid component [the acid component / the diamine component]: 2/1). And then, the resulting mixture was stirred at a reaction temperature of 70 °C for 3 hours for reaction. Subsequently, 47.20 g of ODA and 3.64 g of PPD were dissolved in the reaction solution, and then 29.72 g of s-BPDA and 31.33 g of ODPA were added thereto. And then, the resulting mixture was stirred at a reaction temperature of 50 °C for 20 hours to provide a polyamic acid solution composition having a solid content of 30.8 wt%, a solution viscosity of 5.2 Pa·sec, and an inherent viscosity of 0.23.

The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 2.

<Comparative Example 5>

In a 500 mL glass reaction vessel equipped with a stirrer, a stirring blade, a reflux condenser and a nitrogen-gas charging tube were placed 335 g of NMP as a solvent, 1.91 g of water, 20.24 g of s-BPDA, 21.34 g of ODPA and 13.78 g of ODA (molar ratio of water [water / the acid component]: 3/4; water content: 0.49 wt%; molar ratio of the acid component [the acid component / the diamine component]: 2/1). And then, the resulting mixture was stirred at a reaction temperature of 70 °C for 3 hours for reaction. Subsequently, 34.44 g of ODA and 11.16 g of PPD were dissolved in the reaction solution, and then 64.03 g of ODPA was added thereto. And then, the resulting mixture was stirred at a reaction temperature of 50 °C for 20 hours to provide a polyamic acid solution composition having a solid content of 30.8 wt%, a solution viscosity of 5.2 Pa·sec, and an inherent viscosity of 0.24.

The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.

The properties of the polyimide seamless belt were evaluated.

The results are shown in Table 2.

<Comparative Example 6>

In a 500 mL glass reaction vessel equipped with a stirrer, a stirring blade, a reflux condenser and a nitrogen-gas charging tube were placed 335 g of NMP as a solvent, 1.91 g of water, 41.57 g of s-BPDA and 14.15 g of ODA (molar ratio of water [water / the acid component]: 3/4; water content: 0.49 wt%; molar ratio of the acid component [the acid component / the diamine component]: 2/1). And then, the resulting mixture was stirred at a reaction temperature of 70 °C for 3 hours for reaction. Subsequently, 35.36 g of ODA and 11.46 g of PPD were dissolved in the reaction solution, and then 60.27 g of s-BPDA and 2.19 g of ODPA were added thereto. And then, the resulting mixture was stirred at a reaction temperature of 50 °C for 20 hours to provide a polyamic acid solution composition having a solid content of 30.7 wt%, a solution viscosity of 7.2 Pa·sec, and an inherent viscosity of 0.24.

The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm. However, cracks occurred in about 30 % of the whole area.

The properties of the polyimide seamless belt were evaluated.

The results are shown in Table 2.

<Comparative Example 7>

In a 500 mL glass reaction vessel equipped with a stirrer, a stirring blade, a reflux condenser and a nitrogen-gas charging tube were placed 335 g of NMP as a solvent, 2.18 g of water, 47.48 g of s-BPDA and 8.73 g of PPD (molar ratio of water [water / the acid component]: 3/4; water content: 0.55 wt%; molar ratio of the acid component [the acid component / the diamine component]: 2/1). And then, the resulting mixture was stirred at a reaction temperature of 70 °C for 3 hours for reaction. Subsequently, 34.03 g of PPD and 1.62 g of ODA were dissolved in the reaction solution, and then 35.61 g of s-BPDA and 37.54 g of ODPA were added thereto. And then, the resulting mixture was stirred at a reaction temperature of 50 °C for 20 hours to provide a polyamic acid solution having a solid content of 30.6 wt%, a solution viscosity of 6.8 Pa·sec, and an inherent viscosity of 0.25.
The polyamic acid solution obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm. However, cracks occurred throughout the film, and a polyimide seamless belt could not be obtained.
The results are shown in Table 2.

<Comparative Example 8>

In a 500 mL glass reaction vessel equipped with a stirrer, a stirring blade, a reflux condenser and a nitrogen-gas charging tube were placed 335 g of NMP as a solvent, 1.79 g of water, 39.04 g of s-BPDA and 13.29 g of ODA (molar ratio of water [water / the acid component]: 3/4; water content: 0.46 wt%; molar ratio of the acid component [the acid component / the diamine component]: 2/1). And then, the resulting mixture was stirred at a reaction temperature of 70 °C for 3 hours for reaction. Subsequently, 51.81 g of ODA and 0.72 g of PPD were dissolved in the reaction solution, and then 29.28 g of s-BPDA and 30.87 g of ODPA were added thereto. And then, the resulting mixture was stirred at a reaction temperature of 50 °C for 20 hours to provide a polyamic acid solution composition having a solid content of 31.0 wt%, a solution viscosity of 6.6 Pa·sec, and an inherent viscosity of 0.25.
The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.
The properties of the polyimide seamless belt were evaluated.
The results are shown in Table 2.

<Reference Example 1>

A polyimide seamless belt was prepared using a polyamic acid solution composition having the same composition as Comparative Example 5 but having a higher inherent viscosity.
In a 500 mL (internal volume) glass reaction vessel equipped with a stirrer and a nitrogen-gas charging/discharge tube was placed 400 g of NMP as a solvent. And then, 6.76 g of PPD and 29.23 g of ODA, and 12.27 g of s-BPDA and 51.74 g of ODPA were added thereto, and the resulting mixture was stirred at 50 °C for 10 hours to provide a polyamic acid solution composition having a solid content of 18.3 wt%, a solution viscosity of 8.0 Pa·sec, and an inherent viscosity of 0.87.
The polyamic acid solution composition obtained was uniformly applied on the inner surface of a cylindrical mold having an inside diameter of 150 mm and a length of 300 mm, while rotating the mold at 100 rpm. Subsequently, the resulting coating film was heated at 120 °C for 30 min, 150 °C for 10 min, 200 °C for 10 min, 250 °C for 10 min, and then 350 °C for 10 min, while rotating the mold at 200 rpm, to provide a polyimide seamless belt having a thickness of 50 μm.
The properties of the polyimide seamless belt were evaluated.
The results are shown in Table 2.
Table 1 (Examples)

| | | Example 1 | Example 2 | Example 3 | Example 4 | Example 5 | Example 6 | Example 7 | Example 8 |
|---|---|---|---|---|---|---|---|---|---|
| composition of polyamic acid and catalyst | | | | | | | | | |
| acid component | s-BPDA (mol%) | 70 | 70 | 70 | 70 | 70 | 70 | 50 | 50 |
| | ODPA (mol%) | 30 | 30 | 30 | 30 | 30 | 30 | 50 | 50 |
| diamine component | ODA (mol%) | 70 | 70 | 70 | 70 | 70 | 70 | 50 | 50 |
| | PPD (mol%) | 30 | 30 | 30 | 30 | 30 | 30 | 50 | 50 |
| | HMD (mol%) | | | | | | | | |
| | TMD (mol%) | | | | | | | | |
| catalyst | isoquinoline (molar equivalent) | | | | | 0.1 | | | |
| | 1,2-DMZ (molar equivalent) | | | | | | 0.1 | | |
| polyimide precursor solution composition | | | | | | | | | |
| | inherent viscosity | 0.68 | Same as the left | 0.21 | Same as the left | Same as the left | Same as the left | 0.65 | 0.22 |
| | solid content (wt%) | 18.3 | | 30.3 | | | | 18.2 | 30.1 |
| | solution viscosity (Pa•sec) | 5.1 | | 5.7 | | | | 5.0 | 5.4 |
| polyimide seamless belt | | | | | | | | | |
| | thickness (µm) | 50 | 50 | 50 | 50 | 50 | 50 | 50 | 50 |
| | tensile strength at break (MPa) | 278 | 200 | 258 | 191 | 200 | 195 | 240 | 220 |
| | tensile elongation at break (%) | 107 | 88 | 90 | 78 | 85 | 82 | 82 | 74 |
| | tensile elastic modulus (GPa) | 4.0 | 3.2 | 4.1 | 3.0 | 3.2 | 3.1 | 4.5 | 4.6 |
| | tensile energy at break (MJ/m3) | 191 | 125 | 175 | 115 | 120 | 118 | 150 | 130 |
| | state of seamless belt | ○ | ○ | ○ | ○ | ○ | ○ | ○ | ○ |

Table 1 (Examples)

| | | Example 9 | Example 10 | Example 11 | Example 12 | Example 13 | Example 14 |
|---|---|---|---|---|---|---|---|
| composition of polyamic acid and catalyst | | | | | | | |
| acid component | s-BPDA (mol%) | 70 | 70 | 70 | 70 | 50 | 50 |
| | ODPA (mol%) | 30 | 30 | 30 | 30 | 50 | 50 |
| diamine component | ODA (mol%) | 30 | 30 | 65 | 65 | 45 | 45 |
| | PPD (mol%) | 70 | 70 | 30 | 30 | 50 | 50 |
| | HMD (mol%) | | | 5 | | 5 | |
| | TMD (mol%) | | | | 5 | | 5 |
| catalyst | isoquinoline (molar equivalent) | | | | | | |
| | 1,2-DMZ (molar equivalent) | | | | | | |
| polyimide precursor solution composition | | | | | | | |
| | inherent viscosity | 0.64 | 0.23 | 0.25 | 0.24 | 0.24 | 0.23 |
| | solid content (wt%) | 18.1 | 30.2 | 30.3 | 30.5 | 30.5 | 30.6 |
| | solution viscosity (Pa•sec) | 5.3 | 5.2 | 6.4 | 7.3 | 7.2 | 6.3 |
| polyimide seamless belt | | | | | | | |
| | thickness (μm) | 50 | 50 | 50 | 50 | 50 | 50 |
| | tensile strength at break (MPa) | 420 | 380 | 215 | 196 | 251 | 259 |
| | tensile elongation at break (%) | 65 | 50 | 46 | 45 | 41 | 38 |
| | tensile elastic modulus (GPa) | 6.5 | 6.4 | 3.9 | 3.8 | 4.4 | 4.4 |
| | tensile energy at break (MJ/m3) | 148 | 120 | 146 | 137 | 149 | 143 |
| | state of seamless belt | ○ | ○ | ○ | ○ | ○ | ○ |

Table 2 (Comparative Examples)

| | | Comparative Example 1 | Comparative Example 2 | Comparative Example 3 | Comparative Example 4 | Comparative Example 5 | Comparative Example 6 | Comparative Example 7 | Comparative Example 8 | Reference Example 1 |
|---|---|---|---|---|---|---|---|---|---|---|
| composition of polyamic acid | | | | | | | | | | |
| acid component | s-BPDA (mol%) | 70 | 100 | 100 | 70 | 20 | 98 | 70 | 70 | 20 |
| | ODPA (mol%) | 30 | | | 30 | 80 | 2 | 30 | 30 | 80 |
| diamine component | ODA (mol%) | | 100 | | 90 | 70 | 70 | 2 | 98 | 70 |
| | PPD (mot%) | 100 | | 100 | 10 | 30 | 30 | 98 | 2 | 30 |
| polyimide precursor solution composition | | | | | | | | | | |
| | inherent viscosity | 0.25 | 0.24 | 0.23 | 0.23 | 0.24 | 0.24 | 0.25 | 0.25 | 0.87 |
| | solid content (wt%) | 30.8 | 31.0 | 30.3 | 30.8 | 30.8 | 30.7 | 30.6 | 31.0 | 18.3 |
| | solution viscosity (Pa·sec) | 6.7 | 8.9 | 6.4 | 5.2 | 5.2 | 7.2 | 6.8 | 6.6 | 8.0 |
| polyimide seamless belt | | | | | | | | | | |
| | thickness (μm) | 50 | 50 | 50 | 50 | 50 | 50 | 50 | 50 | 50 |

(continued)

| polyimide seamless belt | | | | | | | | | | |
|---|---|---|---|---|---|---|---|---|---|---|
| | tensile strength at break (MPa) | Not determined due to cracks | 155 | Not determined due to cracks | 121 | 155 | 214 | Not determined due to cracks | 171 | 193 |
| | tensile elongation at break (%) | | 40 | | 6 | 51 | 46 | | 60 | 72 |
| | tensile elastic modulus (GPa) | | 3.4 | | 3.4 | 3.6 | 4 | | 3.3 | 3.6 |
| | tensile energy at break (MJ/m3) | | 85 | | 4 | 58 | 71 | | 61 | 97 |
| | state of seamless belt | × | Δ | × | ○ | ○ | Δ | × | ○ | ○ |

Industrial Applicability

According to the present invention, there may be provided a seamless belt of a polyimide having the specific chemical structure and having very high toughness; a process for producing the seamless belt; and a polyimide precursor solution composition to be used for the production. In addition, according to the present invention, a polyimide seamless belt having very high toughness may be easily and reliably produced even when using a polyimide precursor solution composition comprising a polyamic acid solution which has a high concentration and a low viscosity. The seamless belt of the present invention may be suitably used as an intermediate transfer belt or a fixing belt of an electrophotographic device, which requires high toughness.

**Claims**

**1.** A seamless belt formed essentially of a polyimide comprising a repeating unit represented by the formula (1):

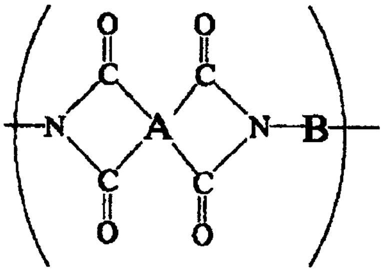

Formula (1)

wherein
25 mol% to 95 mol% of A is a tetravalent unit represented by the formula (2):

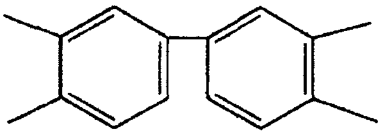

Formula (2)

;

75 mol% to 5 mol% of A is a tetravalent unit represented by the formula (3):

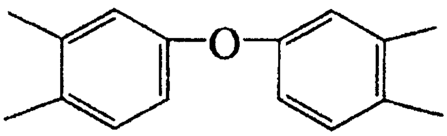

Formula (3)

;

15 mol% to 95 mol% of B is a divalent unit represented by the formula (4):

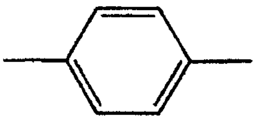

Formula (4)

;

and 85 mol% to 5 mol% of B is a divalent unit represented by the formula (5):

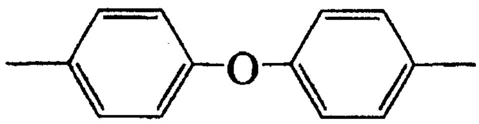

Formula (5)

**2.** The seamless belt as claimed in Claim 1, wherein in the formula (1),

25 mol% to 95 mol% of A is a tetravalent unit represented by the formula (2);
75 mol% to 5 mol% of A is a tetravalent unit represented by the formula (3);
0 mol% to 10 mol% of A is a tetravalent unit of an aliphatic tetracarboxylic acid, from which carboxyl groups have been removed;
15 mol% to 95 mol% of B is a divalent unit represented by the formula (4);
85 mol% to 5 mol% of B is a divalent unit represented by the formula (5); and
0 mol% to 10 mol% of B is a divalent unit of an aliphatic diamine, from which amino groups have been removed.

**3.** The seamless belt as claimed in Claim 1 or 2, wherein the seamless belt has a tensile energy at break of 100 $MJ/m^3$ or higher.

**4.** The seamless belt as claimed in any one of Claims 1 to 3, wherein the seamless belt is an intermediate transfer belt of an electrophotographic device.

**5.** The seamless belt as claimed in any one of Claims 1 to 3, wherein the seamless belt is a fixing belt of an electrophotographic device.

**6.** A process for producing a seamless belt, comprising steps of:

forming a seamless coating film on a surface of a substrate, wherein the coating film is formed of a polyimide precursor solution composition comprising a polyamic acid solution in which a polyamic acid comprising a repeating unit represented by the formula (6):

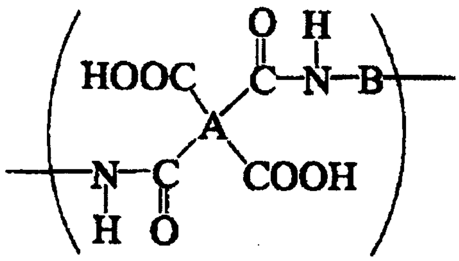

Formula (6)

wherein

25 mol% to 95 mol% of A is a tetravalent unit represented by the formula (2);
75 mol% to 5 mol% of A is a tetravalent unit represented by the formula (3);
15 mol% to 95 mol% of B is a divalent unit represented by the formula (4); and
85 mol% to 5 mol% of B is a divalent unit represented by the formula (5);

is dissolved in an organic solvent; and
heating the seamless coating film, to provide a polyimide seamless belt.

**7.** The process for producing a seamless belt as claimed in Claim 6, wherein the polyimide precursor solution composition comprises a pyridine compound and/or an imidazole.

**8.** The process for producing a seamless belt as claimed in Claim 6 or 7, wherein the polyamic acid in the polyamic acid solution has an inherent viscosity of 0.4 or lower.

**9.** The process for producing a seamless belt as claimed in any one of Claims 6 to 8, wherein the polyamic acid solution has a solid content in terms of polyimide of from 20 wt% to 60 wt%, and has a solution viscosity at 30 °C of 50 Pa·sec or lower.

**10.** The process for producing a seamless belt as claimed in any one of Claims 6 to 9, wherein the highest heating temperature in the heat treatment is 250 °C or lower.

**11.** The process for producing a seamless belt as claimed in any one of Claims 6 to 10, wherein the seamless belt is produced by rotational molding.

**12.** A polyimide precursor solution composition comprising a polyamic acid solution in which a polyamic acid comprising a repeating unit represented by the formula (6) is dissolved in an organic solvent, wherein
the polyamic acid in the polyamic acid solution has an inherent viscosity of 0.4 or lower.

**13.** The polyimide precursor solution composition as claimed in Claim 12, wherein the polyamic acid solution has a solid content in terms of polyimide of from 20 wt% to 60 wt%, and has a solution viscosity at 30 °C of 50 Pa·sec or lower.

## INTERNATIONAL SEARCH REPORT

International application No.
PCT/JP2011/078970

A. CLASSIFICATION OF SUBJECT MATTER
*C08G73/10*(2006.01)i, *G03G15/00*(2006.01)i, *G03G15/16*(2006.01)i, *G03G15/20* (2006.01)i

According to International Patent Classification (IPC) or to both national classification and IPC

B. FIELDS SEARCHED

Minimum documentation searched (classification system followed by classification symbols)
C08G73/10, G03G15/00, G03G15/16, G03G15/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-85450 A (Ube Industries, Ltd.), 15 April 2010 (15.04.2010), (Family: none) | 1-13 |
| A | JP 2008-266641 A (Ube Industries, Ltd.), 06 November 2008 (06.11.2008), & US 2010/130628 A1 & EP 2141187 A1 & CN 101679632 A | 1-13 |
| A | JP 2004-115788 A (Du Pont-Toray Co., Ltd.), 15 April 2004 (15.04.2004), (Family: none) | 1-13 |
| A | JP 2002-363284 A (Kaneka Corp.), 18 December 2002 (18.12.2002), (Family: none) | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 January, 2012 (05.01.12) | 17 January, 2012 (17.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/078970

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-226584 A (E I Du Pont De Nemours and Co.),<br>14 August 2002 (14.08.2002),<br>& US 2002/128424 A1 & EP 1217026 A2 | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006307114 A
- JP 2003089125 A
- JP 2007240845 A
- JP 2009221397 A
- JP 2010085450 A
- WO 2008120787 A
- JP H03157428 A
- JP S57131248 A
- JP 2008144159 A